# EUROPEAN PATENT SPECIFICATION

(11) **EP 2 701 488 B1**
(45) Date of publication and mention of the grant of the patent: **10.08.2016**
(21) Application number: 12777718.3
(22) Date of filing: 20.04.2012
(51) Int. Cl.: A01P 13/00, A01N 39/02, A01N 39/04, A01N 57/20

(54) **METHOD FOR CONTROLLING WEEDS IN A FIELD OF COTTON PLANTS**
VERFAHREN ZUR BEKÄMPFUNG VON UNKRÄUTERN IN EINEM FELD VON BAUMWOLLPFLANZEN
MÉTHODE DE LUTTE CONTRE LES MAUVAISES HERBES DANS UN CHAMP DE PLANTS DE COTON

(30) Priority: 27.04.2011 US 201161479533 P
(43) Date of publication of application: 05.03.2014
(73) Proprietor: Dow AgroSciences LLC, Indianapolis, IN 46268 (US)
(72) Inventor: RICHBURG, John, S., Headland, Alabama 36345 (US); WRIGHT, Terry, R., Westfield, Indiana 46074 (US); BRAXTON, Leon, B., Travelers Rest, South Carolina 29690 (US); ROBINSON, Andrew, E., Brownsburg, Indiana 46112 (US)
(74) Representative: Beck Greener
(86) International application number: PCT/US2012/034503
(87) International publication number: WO 2012/148818

(56) References cited:
- WO-A2-2007/053482
- WO-A2-2008/051633
- US-A1- 2008 119 361
- US-A1- 2010 323 893
- US-B2- 7 838 733

## Description

### PRIORITY CLAIM

This application claims the benefit of the filing date of United States Provisional Patent Application Serial Number 61/479,533, filed April 27, 2011, for "METHOD FOR CONTROLLING WEEDS IN A FIELD OF COTTON PLANTS."

### TECHNICAL FIELD

The present invention relates to a method of controlling undesirable vegetation in a field containing an auxin and glufosinate herbicide-resistant cotton crop comprising applying to the location where control is desired a mixture of effective amounts of 2,4-DB and glufosinate.

### BACKGROUND

The use of a mixture of auxinic and glufosinate herbicides to control undesired vegetation in a field of an auxin and glufosinate herbicide-resistant cotton crop may cause transient injury to the crop that could delay its development. Visible transient injury may include a combination of leaf droop, leaf rolling, and petiole curvature-together referred to as epinasty. Other transient injury that may be visible 10 to 14 days after application includes leaf strapping, malformation, and epinasty on leaves. Such transient, early-season injury may result in an undesirable extension of the time for the cotton crop to mature, causing the grower to incur additional expenses and possibly reducing overall crop yield.

WO2008/051633 discloses a method of weed management including planting a crop plant with tolerance to, for example, 2,4-D and using 2,4-D as a herbicide.

The present invention addresses and solves the problems associated with crop injury that results from the application of a mixture of an auxinic herbicide and glufosinate to control undesirable vegetation in a field containing an auxin and glufosinate herbicide-resistant crop including delayed earliness resulting from the early-season herbicide injury.

### DISCLOSURE OF THE INVENTION

An object of the present invention is a method of controlling undesirable vegetation in a field containing an auxin and a glufosinate herbicide-resistant cotton crop comprising applying to the location where control is desired effective amounts of 2,4-DB and glufosinate.

Another object of the present invention is a method wherein injury to the herbicide-resistant cotton crop is reduced relative to an application of a mixture of an acid equivalent amount of 2,4-D and glufosinate.

Additional objects and advantages of the present invention will become readily apparent to those skilled in this art from the following detailed description, wherein embodiments of the invention are described simply by way of illustrating the best mode contemplated in carrying out the invention. As will be realized, the invention is capable of other and different embodiments, and its several details are capable of modifications in various obvious respects, all without departing from the invention. Accordingly, the description is to be regarded as illustrative in nature and not as restrictive.

### MODE(S) FOR CARRYING OUT THE INVENTION

The present inventions will be described more fully hereinafter. Indeed, these inventions may be embodied in many different forms and should not be construed as limited to the embodiments set forth herein; rather, these embodiments are provided so that this disclosure will satisfy applicable legal requirements. Like numbers refer to like elements throughout.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

The present invention is drawn to a method of controlling undesirable vegetation in a field containing an auxin and glufosinate herbicide-resistant cotton crop comprising applying to the location where control is desired an effective amount of 2,4-DB and glufosinate.

As used in this specification and unless otherwise indicated the term "herbicide" refers to a molecule or combination of molecules that retards or otherwise kills undesirable, unwanted plants; such as, but not limited to, deleterious or annoying weeds, broadleaf plants, grasses, and sedges; and may be used in this manner for crop protection. The phrase "effective amount" means an amount of herbicide necessary to produce an observable desired effect to reduce unwanted plant growth, including the effects of plant necrosis, plant death, growth inhibition, reproduction inhibition, inhibition of proliferation, and removal, destruction, or otherwise diminishing the occurrence and activity of undesirable, unwanted plants. Undesirable, unwanted plants include herbicide-tolerant weeds such as glyphosate-tolerant weeds.

"Auxin herbicide" includes herbicides having the aryloxyalkanoate chemical structure such as the phenoxyacetate auxins (e.g., 2,4-D and MCPA), phenoxybutanoate auxins (*e.g*.,2,4-DB and MCPB) and pyridyloxyacetate auxins (*e.g.*, fluroxypry and triclopyr).

Numerous auxinic herbicide-resistance genes may be employed with the plants of the invention. Cotton crops may be transformed to contain any of a family of resistance genes (designated *AAD*) that code for an enzyme, aryloxyalkanoate dioxygenase (AAD), which then inactivates an auxin herbicide *in planta.* Such herbicide resistance may be conferred by *AAD-1* (originally from *Sphingobium herbicidovorans*), *AAD-12* (originally from *Delftia acidovorans*), and *AAD-13* genes as disclosed in PCT publication WO 2005/107437, PCT publication WO 2007/053482, and PCT publication US 2010/0251432 A1.

Glufosinate is another herbicide with a different mode of action from auxinic herbicides. Resistance to glufosinate is provided to plants that are transformed with the *PAT* gene, which was originally isolated from *Streptomyces viridochromogenes* and first disclosed in US 5273894A.

A mixture of glufosinate and an auxinic herbicide such as 2,4-DB, is applied by a convenient method to the location where weed control is desired. The "location" is intended to include soil, seeds, and seedlings, as well as established vegetation. Herbicidal activity is exhibited by a mixture of 2,4-DB and glufosinate when it is applied directly to the plant or to the location of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote the intended herbicidal action. Generally, it is preferred to apply mixtures of 2,4-DB and glufosinate postemergence to relatively immature undesirable vegetation to achieve the maximum control of weeds.

Cotton *(Gossypium* spp.) is the world's most important textile fiber crop and is one of the world's most important oilseed crops. Cotton plants provide a source of human food, livestock feed, and raw material in industry. Cottonseed is pressed for cooking oil and the residual cottonseed meal is used for animal feed. Industrial uses of cotton include candlewicks, twine, paper and a multitude of fabric products.

The genus *Gossypium* is very large, currently containing 50 species. Two tetraploid species of *Gossypium* have spinnable seed fibers called lint. These two species are *G*. *hirsutum* (referred to as American Upland cotton) and *G*. *barbadense* (referred to as Pima cotton).

Cotton is a dicot plant with perfect flowers, i.e., cotton has male, pollen-producing organs and separate female, pollen-receiving organs on the same flower. The cultivated cotton flower is surrounded by three triangular bracts forming what is commonly known as squares. The flower contains an open corolla with five petals, a staminal column bearing clusters of stamens and forming a tube that encloses the style. The compound pistil consists of three to five carpels with stigmas protruding above the anthers. The ovary develops into a three- to five-loculed capsule or boll. From seven to nine seeds are set within each lock or locule. On the day preceding anthesis, a twisted corolla emerges from the square. On the day of anthesis, the corolla opens and pollen shedding occurs. The corolla turns red the day following anthesis and later falls from the plant. Pollination occurs with the opening of the anthers and shedding of pollen on the stigma or with the deposit of pollen on the stigma by insects.

By "plant" is intended whole plants, plant organs (*e.g*., leaves, stems, roots, etc.), seeds, plant cells, propagules, embryos and progeny of the same. Plant cells can be differentiated or undifferentiated (*e.g*., callus, suspension culture cells, protoplasts, leaf cells, root cells, phloem cells, and pollen).

"Transgenic plants" or "transformed plants" or "stably transformed" plants, cells or tissues refer to plants that have incorporated or integrated exogenous nucleic acid sequences or DNA fragments into the plant cell. By "stable transformation" is intended that the nucleotide construct introduced into a plant integrates into the genome of the plant and is capable of being inherited by progeny thereof.

The herbicidally active compounds 4-(2,4-dichlorophenoxy) butyric acid or 2,4-DB and glufosinate are described, for example, in Tomlin, Clive (editor) (2009) "The Pesticide Manual", Fifteenth Edition, British Crop Protection Council (BCPC), pages 306-308 and 587-589.

Suitable agricultural adjuvants and carriers that are useful in preparing the herbicidal mixtures of the invention are well known to those skilled in the art. Liquid carriers that can be used include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, and the like. Water is generally the carrier of choice for the dilution of concentrates. Solid carriers that can be used include talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Typical surface-active agents include salts of alkyl sulfates, such as diethanolammonium lauryl sulfate; alkylarylsulfonate salts, such as calciumdodecylbenzenesulfonate; alkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl)-sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the herbicidal compositions of this invention is generally from about 0.001 to about 98 percent by weight. Concentrations from about 0.01 to about 90 percent by weight are often employed. In compositions designed to be employed as concentrates, the active ingredient is generally present in a concentration from about 5 to about 98 weight percent, preferably about 10 to about 90 weight percent. Such compositions are typically diluted with an inert carrier, such as water, before application. The diluted compositions usually applied to weeds or the location of weeds generally contain about 0.0001 to about 1 weight percent active ingredient and preferably contain about 0.001 to about 0.05 weight percent.

In the methods of the present invention, the application of the 2,4-DB and glufosinate herbicide mixtures can be carried out, equally in pre-sowing, in pre-emergence, and in post-emergence of the crop. Pre-emergence and/or early post-emergence application is preferred. "Pre-emergent" is defined as application of the herbicide during the period prior to emergence of the crop plant from the ground. "Post-emergent" is defined as application of the herbicide during the period after emergence of the crop plant from the ground where the foliage of the crop plant is contacted by the herbicide. Preferably, the 2,4-DB and glufosinate mixture is applied to the cotton crop post-emergence and during the vegetative growth stage of the cotton crop.

The herbicidal mixture of auxin and glufosinate compounds of the present invention can be applied in conjunction with one or more other herbicides to control a wider variety of undesirable vegetation. When used in conjunction with other herbicides, the presently described mixture can be formulated with the other herbicide or herbicides, tank mixed with the other herbicide or herbicides, or applied sequentially with the other herbicide or herbicides. Some of the herbicides that can be employed in conjunction with the mixtures of the present invention include glyphosate, paraquat, ALS-inhibitors (*e.g*., sulfonylureas, imidazolinones, triazolopyrimidine sulfonanilides, etc.), HPPD inhibitors (*e.g.,* mesotrione, isoxaflutole, etc.), PPO inhibitors *(e.g.,* pyraflufen, fomesafen, etc.), dicamba, bromoxynil, aryloxyalkanoates, aryloxyphenoxypropionate (commonly referred to as "fop" herbicides such as quizalofop), auxins, and others, some of which may require genetic engineering to endow the crop with selectivity to these herbicides.

The present mixture can be applied to weeds or their location by the use of conventional ground or aerial dusters, sprayers, and granule applicators, by addition to irrigation water, and by other conventional means known to those skilled in the art.

In one aspect of the present invention, the injury to the herbicide-resistant cotton crop caused by applying effective amounts of 2,4-DB and glufosinate is reduced relative to an application of effective amounts of 2,4-D and glufosinate. Reduction of injury from herbicides advantageously reduces stress on the crop, thereby possibly reducing time for the crop to mature or even causing the grower to save expenses and increase overall crop yield.

While not intending to be bound by any theory, it is hypothesized that 2,4-DB is not a robust herbicide until it undergoes beta-oxidation *in planta.* This additional metabolic step and/or other factors results in increasing the *AAD*-transformed plant's ability to tolerate applications of 2,4-DB compared to 2,4-D. This concept can apply to all *AAD*-transformed crops but is particularly useful when applied to *AAD*-transformed crops, including cotton, that have a lower resistance to 2,4-D.

By "injury" it is meant the percentage of foliage that is epinastic (has leaf droop, leaf rolling, petiole curvature) as visually assessed by one skilled in the art. The reduced injury from 2,4-DB and glufosinate mixtures relative to 2,4-D and glufosinate mixtures is observable within minutes after application of these herbicides and continues to be observable for an extended time period thereafter, such as from 2 hours after application to 30 days after application, including 3 hours after application to 19 days after application and further including 6 hours after application to 24 hours after application.

The subject invention also is applicable to transgenic auxin herbicide-resistant cotton crops that comprise one or more further herbicide-resistance genes, including, but not limited to, glyphosate, ALS- (imidazolinone, sulfonylurea), a second aryloxyalkanoate-, HPPD-, PPO-, and glufosinate-resistance genes, so as to provide herbicide-resistant plants compatible with broader and more robust weed control and herbicide-resistance management options.

For post-emergence application, rates of about 0.1 to about 2,240 grams acid equivalent/hectare (g ae/ha) are generally employed, and preferably 1 to about 1,120 g ae/ha. For pre-emergence applications, rates of about 1 to about 2,240 g ae/ha are generally employed. The higher rates designated generally give non-selective control of a broad variety of undesirable vegetation. The lower rates typically give selective control and can be employed in the location of cotton crops. In embodiments of the invention, a preferred application rate of 2,4-DB for postemergence operations is at least 280 g ae/ha, preferably from about 280 g ae/ha to about 2,240 g ae/ha. A preferred application rate of glufosinate for postemergence operations is at least 300 g ae/ha, preferably from about 300 g ae/ha to about 1,000 g ae/ha.

In the previous descriptions, numerous specific details are set forth, such as specific materials, structures, chemicals, processes, etc., to provide a better understanding of the present invention. However, the present invention can be practiced without resorting to the details specifically set forth. In other instances, well-known processing structures have not been described in detail in order not to unnecessarily obscure the present invention.

Only the preferred embodiment of the invention and but a few examples of its versatility are shown and described in the present disclosure. It is to be understood that the present invention is capable of use in various other combinations and environments and is capable of changes or modifications within the scope of the inventive concept as expressed herein.

### EXAMPLES

The following examples are included to demonstrate certain preferred embodiments of the invention. These examples should not be construed as limitations to the claims. It should be appreciated by those of skill in the art that the techniques disclosed in the following examples represent specific approaches used to illustrate preferred modes for its practice.

Cotton plants transformed with the *AAD-1* or *AAD-12* genes, encode an aryloxyalkanoate dioxygenase (AAD) protein. Cotton plants transformed with the *PAT* gene, encode a phosphinothricin acetyl transferase (PAT) protein. Consequently, cotton plants transformed with both *AAD* and *PAT* genes have resistance to both auxin and glufosinate herbicides.

Such transformed plants are used in the following examples to demonstrate resistance to auxin herbicides, specifically 2,4-DB and 2,4-D when mixed with a glufosinate herbicide. *AAD-1, AAD-12,* or *PAT* may also be used as a selectable marker during plant transformation and in breeding nurseries. The *AAD-1* gene, itself, for herbicide resistance in plants was first disclosed in WO 2005/107437 (see also US 2009-0093366). The *AAD-12* gene, itself, for herbicide resistance in plants was first disclosed in WO 2007/053482(A2) (see also US 2005731044P). The *PAT* gene, itself, for herbicide resistance in plants was first disclosed in US 5273894A.

### EXAMPLE 1

### 2,4-DB and 2,4-D, Mixed with Glufosinate, Provide Similar Weed Control in Cotton Transformed with AAD-1 and PAT

An experiment to compare the efficacies of 2,4-DB mixed with glufosinate and 2,4-D mixed with glufosinate to control weeds in cotton transformed with *AAD-1* and *PAT* genes was conducted at nine field sites located near Greenville, MS (3 locations); Chula, GA; Macon County, GA; Attapulgus, GA; Memphis, TN; Newport, AR; and Fresno, CA. The experimental design was four replications per site with treatment plots in randomized complete blocks. Each plot had cotton plants in two rows that were 6.1 meters in length. Weed and cotton plants were targeted at five to fifteen cms in height for a single-application treatment. The herbicide treatments consisted of Butyrac 200 (2,4-DB) and Weedar 64 (2,4-D) each mixed at two different concentrations (840 g ae/ha and 1120 g ae/ha) with Ignite 280 (glufosinate) at 542 g ae/ha for a total of four treatments. Weed species were visually assessed once per week for three weeks after herbicide application for the percentage plants killed or showing severe herbicide-related injury (where 0% represents no activity and 100% represents death of all target plants).

For nearly all targeted species and for each week of measurement, greater levels of control were obtained with the higher application rate of 1120 g ae/ha of 2,4-DB or 2,4-D. Therefore, based on efficacy, the application rate of 1120 g ae/ha is preferred over 840 g ae/ha for 2,4-DB and 2,4-D when mixed with glufosinate to control weeds in this herbicide-tolerant cotton. At 1120 g ae/ha, control was >90% of weed plants killed or seriously injured over three weeks after application except for the plants of *Amaranthus* that are resistant to glyphosate (AMAPA gly-res). By the end of the third week after application, control of AMAPA gly-res plants was 79% with 2,4-DB plus glufosinate and 75% with 2,4-D plus glufosinate. Results of weed control one week after application of 2,4-DB or 2,4-D mixed with glufosinate in plots of this herbicide-tolerant cotton are shown in Table 1.

**TABLE 1**

| Percentage Control of Weed Species in *AAD-1*/*PAT*-Transformed Cotton, One Week After Application of 2,4-DB or 2,4-D at 1120 g ae/ha, Each Mixed with Glufosinate at 542 g ae/ha (n=36 plots) | | |
|---|---|---|
| Species^{a} | 2,4-DB + glufosinate | 2,4-D + glufosinate |
| ACCOS | 100 | 100 |
| ACNHI | 99 | 99 |
| AMAPA | 98 | 97 |
| AMAPA GLY-res | 96 | 91 |
| AMARE | 100 | 100 |
| AMASS^{b} | 98 | 98 |
| CASOB | 100 | 100 |
| DEDTO | 99 | 99 |
| IAQTA | 99 | 99 |
| IPOHG | 99 | 100 |
| IPOSS | 98 | 99 |
| MOLVE | 98 | 99 |
| RCHSC | 99 | 99 |
| SEBEX | 100 | 100 |
| SIDSP | 95 | 95 |
| SOLNI | 100 | 100 |

| | | |
|---|---|---|
| Abbreviations: AAD, aryloxyalkanoate dioxygenase; g ae/ha, grams acid equivalent per hectare; GLY-res, glyphosate resistant; PAT, phosphinotricin acetyltransferase ^{a}Species code maintained by the European Plant Protection Organization ^{b}All Amaranthus species excluding AMAPA | | |

### EXAMPLE 2

### Cotton Plants Transformed With AAD-1 and PAT Have Significantly Increased Resistance to 2,4-DB Compared to 2,4-D When Mixed with Glufosinate

Cotton plants transformed with *AAD-1* and *PAT* genes were evaluated for resistance to 2,4-DB and 2,4-D herbicide compounds mixed with glufosinate in one greenhouse experiment. The herbicides Butoxone®(2,4-DB) and Weedar 64 (2,4-D) were mixed with Ignite 280 (glufosinate) and applied to the cotton plants in four treatments (Table 2). The experimental design was four replications of one plant per treatment. The plants were grown in pots and the treatments were not randomized. Plants were at the 3- to 4-leaf stage when sprayed. The sprayed cotton plants were visually assessed for the percentage of foliage showing herbicide-related injury on days-0, 1, 2, 4, and 12 after application.

Results of mean injury observed on cotton plants after spraying with 2,4-DB or 2,4-D with glufosinate are shown in Table 2. The observed injury to the plants was statistically significantly less through 12 days after application for 2,4-DB mixed with glufosinate compared to the identical application rates of 2,4-D mixed with glufosinate, except on days-2 and -4 after application when there was no significant difference at the higher application rate.

**TABLE 2**

| Mean Injury Over Time From 2,4-DB or 2,4-D Applied With Glufosinate Post-Emergence on *AAD-1*/*PAT*-Transformed Cotton | | | | | | |
|---|---|---|---|---|---|---|
| Herbicide Treatment | | Mean Injury (%)^{ab} | | | | |
| Mixture | Rate (g ae/ha) | 0 DAA | 1 DAA | 2 DAA | 4 DAA | 12 DAA |
| 2,4-DB + glufosinate | 1120 + 542 | 1.8 b | 0.5 c | 5.3 b | 2.5 c | 6.8 c |
| 2,4-DB + glufosinate | 2240 + 1084 | 4.3 b | 9.5 b | 17.3 a | 15.0 a | 8.0 c |
| 2,4-D + glufosinate | 1120 + 542 | 15.3 a | 8.8 b | 14.0 a | 8.3 b | 21.3 b |
| 2,4-D + glufosinate | 2240 + 1084 | 18.5 a | 23.0 a | 19.5 a | 17.0 a | 26.0 a |
| Tukey's HSD (P=.05) | | 5.7 | 6.9 | 6.5 | 5.4 | 4.3 |

| | | | | | | |
|---|---|---|---|---|---|---|
| Abbreviations: AAD,aryloxyalkanoate dioxygenase; DAA, days after application; g ae/ha, grams acid equivalent per hectare; HSD, honestly significant difference ^{a}Injury assessed visually as percentage of epinastic cotton-plant foliage; n=4 plants ^{b}Means followed by the same letter do not significantly differ. | | | | | | |

### EXAMPLE 3

### Cotton Plants Transformed With AAD-12 and PAT Have Moderately Increased Resistance to 2,4-DB Compared to 2,4-D When Mixed with Glufosinate

Cotton plants transformed with *AAD-12* and *PAT* genes were evaluated for resistance to 2,4-DB and 2,4-D herbicide compounds mixed with glufosinate in one greenhouse experiment. The herbicides Butoxone®(2,4-DB) and Weedar 64 (2,4-D) were mixed with Ignite 280 (glufosinate) and applied to the cotton plants in four treatments (Table 3). The experimental design was four replications of one plant per treatment. The plants were grown in pots and the treatments were not randomized. Plants were at the 3- to 4-leaf stage when sprayed. The sprayed cotton plants were visually assessed for the percentage of foliage showing herbicide-related injury on days-0, 1, 2, 4, and 12 after application.

Results of mean injury observed on cotton plants after spraying with 2,4-DB or 2,4-D with glufosinate are shown in Table 3. Overall, the observed percentages of control were not statistically significantly different among treatments. Comparing identical concentration rates between herbicide mixtures, the only difference between herbicides was on 1-day after application where the lower rate of 2,4-DB mixed with glufosinate resulted in significantly less injury to the cotton plants than did the lower rate of 2,4-D mixed with glufosinate.

**TABLE 3**

| Mean Injury Over Time From 2,4-DB or 2,4-D Applied With Glufosinate Post-Emergence on *AAD-12*/*PAT* -Transformed Cotton | | | | | | |
|---|---|---|---|---|---|---|
| Herbicide Treatment | | Mean Injury (%)^{ab} | | | | |
| Mixture | Rate (g ae/ha) | 0 DAA | 1 DAA | 2 DAA | 4 DAA | 12 DAA |
| 2,4-DB + glufosinate | 1120 + 542 | 0.5 a | 0.0 b | 2.3 b | 1.0 c | 4.8 a |
| 2,4-DB + glufosinate | 2240 + 1084 | 1.8 a | 9.8 a | 9.5 a | 9.8 a | 4.5 a |
| 2,4-D + glufosinate | 1120 + 542 | 3.0 a | 7.3 a | 5.5 ab | 4.0 bc | 4.3 a |
| 2,4-D + glufosinate | 2240 + 1084 | 4.8 a | 6.3 a | 10.0 a | 8.0 ab | 6.8 a |
| Tukey's HSD (P=.05) | | 5.4 | 5.5 | 5.2 | 4.6 | 4.5 |

| | | | | | | |
|---|---|---|---|---|---|---|
| Abbreviations: AAD,aryloxyalkanoate dioxygenase; DAA, days after application; g ae/ha, grams acid equivalent per hectare; HSD, honestly significant difference ^{a}Injury assessed visually as percentage of epinastic cotton-plant foliage; n=4 plants ^{b}Means followed by the same letter do not significantly differ. | | | | | | |

## Claims

1. A method of controlling undesirable vegetation in a field containing an auxin and glufosinate herbicide-resistant cotton crop comprising applying to the location where control is desired a mixture of an effective amount of 2,4-DB and an effective amount of glufosinate.

2. The method of claim 1, wherein the auxin herbicide-resistant cotton crop is an auxin and glufosinate herbicide-resistant cotton crop and wherein injury to the herbicide-resistant cotton crop is reduced relative to an application of a mixture of an acid equivalent amount of 2,4-D and glufosinate.

3. The method of claim 2, wherein injury to the herbicide-resistant cotton crop is reduced relative to an application of a mixture of an acid equivalent amount of 2,4-D and glufosinate at 6 hours after application.

4. The method of claim 2, wherein injury to the herbicide-resistant cotton crop is reduced relative to an application of a mixture of an acid equivalent amount of 2,4-D and glufosinate at 24 hours after application.

5. The method of claim 1, wherein the auxin herbicide-resistant cotton crop is an aryloxyalkanoate auxin herbicide-resistant cotton crop.

6. The method of claim 2, wherein injury to the herbicide-resistant cotton crop is reduced relative to an application of an equivalent amount of a mixture of 2,4-D and glufosinate at any time period up to 12 days after application.

7. The method of claim 5, wherein the aryloxyalkanoate herbicide-resistant cotton crop is a transgenic cotton crop.

8. The method of claim 7, wherein the transgenic aryloxyalkanoate herbicide-resistant cotton crop further comprises at least one further herbicide-tolerance gene.

9. The method of claim 5, wherein the
aryloxyalkanoate-herbicide-resistant cotton crop comprises a gene coding for AAD -1 (aryloxyalkanoate dioxygenase).

10. The method of claim 5, wherein the aryloxyalkanoate herbicide-resistant cotton crop comprises a gene coding for AAD-12 (aryloxyalkanoate dioxygenase).

11. The method of claim 1, wherein the effective amount of 2,4-DB is at least 280 grams acid equivalent/hectare and wherein the effective amount of glufosinate is at least 300 g ae/ha.

12. The method of claim 1, wherein the effective amount of 2,4-DB is from 280 grams acid equivalent/hectare to 2,240 grams acid equivalent/hectare and wherein the effective amount of glufosinate is from 300 g ae/ha to 1,000 g ae/ha.

13. The method of claim 1, wherein the mixture of 2,4-DB and glufosinate is applied to the auxin herbicide-resistant cotton crop post emergent.

14. The method of claim 1, wherein the mixture of 2,4-DB and glufosinate is applied to the auxin herbicide-resistant cotton crop post emergent during the vegetative stage of growth of the auxin herbicide-resistant cotton crop.

15. The method of claim 1, wherein the undesirable vegetation comprises a glyphosate-resistant weed.

16. The method of claim 1 comprising applying an additional herbicide to the location where control is desired.

## Patentansprüche

1. Verfahren zur Bekämpfung von unerwünschtem Pflanzenwuchs in einem Feld, das einen gegen Auxin- und Glufosinat-Herbizit resistenten Baumwollanbau enthält, das die Anwendung einer Mischung einer wirksamen Menge von 2,4-DB und einer wirksamen Menge von Glufosinat an dem Ort, an dem die Bekämpfung erwünscht ist, umfasst.

2. Verfahren nach Anspruch 1, wobei es sich bei dem gegen Auxin-Herbizid resistenten Baumwollanbau um einen gegen Auxin- und Glufosinat-Herbizit resistenten Baumwollanbau handelt und wobei die Schädigung des Herbizid-resistenten Baumwollanbaus in Bezug auf die Anwendung einer Mischung aus einer säureäquivalenten Menge von 2,4-D und Glufosinat reduziert ist.

3. Verfahren nach Anspruch 2, wobei die Schädigung des Herbizid-resistenten Baumwollanbaus in Bezug auf die Anwendung einer Mischung aus einer säureäquivalenten Menge von 2,4-D und Glufosinat 6 Stunden nach der Anwendung reduziert ist.

4. Verfahren nach Anspruch 2, wobei die Schädigung des Herbizid-resistenten Baumwollanbaus in Bezug auf die Anwendung einer Mischung aus einer säureäquivalenten Menge von 2,4-D und Glufosinat 24 Stunden nach der Anwendung reduziert ist.

5. Verfahren nach Anspruch 1, wobei es sich bei dem gegen Auxin-Herbizit resistenten Baumwollanbau um einen gegen Aryloxyalkanoat-Auxin-Herbizit resistenten Baumwollanbau handelt.

6. Verfahren nach Anspruch 2, wobei die Schädigung des Herbizid-resistenten Baumwollanbaus in Bezug auf die Anwendung einer äquivalenten Menge einer Mischung aus 2,4-D und Glufosinat an einem Zeitpunkt von bis zu 12 Tagen nach der Anwendung reduziert ist.

7. Verfahren nach Anspruch 5, wobei es sich bei dem gegen Aryloxyalkanoat-Herbizit resistenten Baumwollanbau um einen transgenen Baumwollanbau handelt.

8. Verfahren nach Anspruch 7, wobei der transgene, gegen Aryloxyalkanoat-Herbizit resistente Baumwollanbau zumindest ein weiteres Heribzidtoleranz-Gen umfasst.

9. Verfahren nach Anspruch 5, wobei der gegen Aryloxyalkanoat-Herbizit resistente Baumwollanbau ein für AAD-1 (Aryloxyalkanoat-dioxygenase) kodiertes Gen umfasst.

10. Verfahren nach Anspruch 5, wobei der gegen Aryloxyalkanoat-Herbizit resistente Baumwollanbau ein für AAD-12 (Aryloxyalkanoat-dioxygenase) kodiertes Gen umfasst.

11. Verfahren nach Anspruch 1, wobei es sich bei der wirksamen Menge von 2,4-DB um mindestens 280 Gramm Säureäquivalent/Hektar handelt und wobei es sich bei der wirksamen Menge von Glufosinat um mindestens 300 g a.e./ha handelt.

12. Verfahren nach Anspruch 1, wobei es sich bei der wirksamen Menge von 2,4-DB um eine Menge zwischen 280 Gramm Säureäquivalent/Hektar und 2.240 Gramm Säureäquivalent/Hektar handelt und wobei es sich bei der wirksamen Menge von Glufosinat um eine Menge zwischen 300 g a.e./ha und 1.000 g a.e./ha handelt.

13. Verfahren nach Anspruch 1, wobei die Mischung aus 2,4-DB und Glufosinat postemergent auf den gegen Auxin-Herbizid resistenten Baumwollanbau angewendet wird.

14. Verfahren nach Anspruch 1, wobei die Mischung aus 2,4-DB und Glufosinat postemergent auf den gegen Auxin-Herbizid resistenten Baumwollanbau während dem vegetativen Wachstumsstadium des gegen Auxin-Herbizid resistenten Baumwollanbaus angewendet wird.

15. Verfahren nach Anspruch 1, wobei der unerwünschtem Pflanzenwuchs Glyphosat-resistentes Unkraut umfasst.

16. Verfahren nach Anspruch 1, das die Anwendung eines zusätzlichen Herbizids an dem Ort, an dem die Bekämpfung erwünscht ist, umfasst.

## Revendications

1. Méthode de lutte contre la végétation indésirable dans un champ contenant une culture de coton résistant aux herbicides à base d'auxine et de glufosinate consistant à appliquer à l'endroit que l'on souhaite traiter un mélange d'une quantité efficace de 2,4-DB et d'une quantité efficace de glufosinate.

2. Procédé selon la revendication 1, ladite culture de coton résistant aux herbicides à base d'auxine étant une culture de coton résistant aux herbicides à base d'auxine et de glufosinate et les dommages causés à la culture de coton résistant aux herbicides étant réduits par rapport à l'application d'un mélange d'une quantité d'équivalent acide de 2,4-D et de glufosinate.

3. Méthode selon la revendication 2, lesdits dommages causés à la culture de coton résistant aux herbicides étant réduits par rapport à l'application d'une quantité d'équivalent acide de 2,4-D et de glufosinate 6 heures après application.

4. Méthode selon la revendication 2, lesdits dommages causés à la culture de coton résistant aux herbicides étant réduits par rapport à l'application d'un mélange d'une quantité d'équivalent acide de 2,4-D et de glufosinate 24 heures après application.

5. Méthode selon la revendication 1, ladite culture de coton résistant aux herbicides à base d'auxine étant une culture de coton résistant aux herbicides à base d'auxine aryloxyalcanoate.

6. Méthode selon la revendication 2, lesdits dommages causés à la culture de coton résistant aux herbicides étant réduits par rapport à l'application d'une quantité équivalente d'un mélange de 2,4-D et de glufosinate à tout moment jusqu'à 12 jours après application.

7. Méthode selon la revendication 5, ladite culture résistant aux herbicides à base d'aryloxyalcanoate étant une culture de coton transgénique.

8. Méthode selon la revendication 7, ladite culture de coton transgénique résistant aux herbicides à base d'aryloxyalcanoate comprenant en outre au moins un gène supplémentaire de tolérance aux herbicides.

9. Méthode selon la revendication 5, ladite culture de coton résistant aux herbicides à base d'aryloxyalcanoate comprenant un gène codant l'AAD-1 (aryloxyalkanoate dioxygénase).

10. Méthode selon la revendication 5, ladite culture de coton résistant aux herbicides à base d'aryloxyalcanoate comprenant un gène codant l'AAD-12 (aryloxyalkanoate dioxygénase).

11. Méthode selon la revendication 1, ladite quantité efficace de 2,4-DB valant au moins 280 grammes d'équivalent acide/hectare et ladite quantité efficace de glufosinate étant valant au moins 300 g d'ea/ha.

12. Méthode selon la revendication 1, ladite quantité efficace de 2,4-DB valant de 280 grammes d'équivalent acide/hectare à 2240 grammes d'équivalent acide/hectare et ladite quantité efficace de glufosinate valant de 300 g d'ea/ha à 1000 g d'ea/ha.

13. Méthode selon la revendication 1, ledit mélange de 2,4-DB et de glufosinate étant appliqué sur la culture de coton résistant aux herbicides à base d'auxine post-émergente.

14. Méthode selon la revendication 1, ledit mélange de 2,4-DB et de glufosinate étant appliqué sur la culture de coton résistant aux herbicides à base d'auxine post-émergente au cours du stade végétatif de croissance de la culture de coton résistant aux herbicides à base d'auxine.

15. Méthode selon la revendication 1, ladite végétation indésirable comprenant une mauvaise herbe résistant au glyphosate.

16. Méthode selon la revendication 1 consistant à appliquer un herbicide supplémentaire à l'endroit que l'on souhaite traiter.
